# EUROPEAN PATENT APPLICATION

(11) **EP 4 657 942 A1**
(43) Date of publication of application: **03.12.2025**
(21) Application number: 24752928.2
(22) Date of filing: 09.02.2024
(51) Int. Cl.: H04W 72/0446

(54) **COMMUNICATION METHOD AND COMMUNICATION APPARATUS**

(30) Priority: 10.02.2023 CN 202310127394; 16.02.2023 CN 202310156240
(71) Applicant: Huawei Technologies Co., Ltd., Shenzhen, Guangdong 518129 (CN)
(72) Inventor: CHEN, Ying, Shenzhen, Guangdong 518129 (CN); TIE, Xiaolei, Shenzhen, Guangdong 518129 (CN); ZHANG, Jingwei, Shenzhen, Guangdong 518129 (CN); DU, Yinggang, Shenzhen, Guangdong 518129 (CN)
(74) Representative: Goddar, Heinz J.
(86) International application number: PCT/CN2024/077094
(87) International publication number: WO 2024/165074

(57) **Abstract**

This application provides a communication method and a communication apparatus. The method includes: A first communication apparatus sends a first downlink frame to a terminal device, where the first downlink frame includes N first downlink subframes; the first communication apparatus receives a first uplink frame from the terminal device, where the first uplink frame includes N first uplink subframes; and the first communication apparatus receives first information from the terminal device, and sends the first information to a positioning server, where the first information indicates a time difference between a moment of receiving an i^{th} first downlink subframe by the terminal device and a moment of sending an i^{th} first uplink subframe by the terminal device, N is a positive integer, and i=1, ..., N. The first information is sent to the positioning server, so that the positioning server can verify a position of the terminal device based on the time difference between the moment of receiving the i^{th} first downlink subframe by the terminal device and the moment of sending the i^{th} first uplink subframe by the terminal device.

## Description

This application claims priorities to Chinese Patent Application No. 202310127394.6, filed with the China National Intellectual Property Administration on February 10, 2023, and entitled "COMMUNICATION METHOD AND COMMUNICATION APPARATUS", and to Chinese Patent Application No. 202310156240.X, filed with the China National Intellectual Property Administration on February 16, 2023, and entitled "COMMUNICATION METHOD AND COMMUNICATION APPARATUS", both of which are incorporated herein by reference in their entireties.

### TECHNICAL FIELD

This application relates to the field of communication technologies, and more specifically, to a communication method and a communication apparatus.

### BACKGROUND

Compared with a conventional mobile communication system, satellite communication has wider coverage, supports a case in which an asymmetric transmission link and communication costs are independent of a transmission distance, and can overcome natural geographical obstacles such as oceans, deserts, and mountains. In satellite communication, a satellite cell usually covers a large area, and may cross a border to cover a plurality of countries and regions. When a satellite provides communication services such as disaster warning, an emergency call, and toll charging in compliance with laws and regulations of a country or a region, a location of a terminal device usually needs to be known.

In existing satellite communication, positioning of a ground terminal device is usually implemented through a dedicated positioning satellite, and the positioning satellite is mainly used by the terminal device to position the terminal device. The terminal device reports position information of the terminal device to a network side. However, the position information reported by the ground terminal device may be tampered with, or the reported position information is affected by interference and has a large error. Therefore, how to implement positioning of the ground terminal device by the network side or verification of the position information reported by the ground terminal device is a problem that needs to be resolved.

### SUMMARY

This application provides a communication method and a communication apparatus, to implement positioning and position verification of a terminal device.

According to a first aspect, a communication method is provided. The method may be performed by a first communication apparatus. The first communication apparatus may be a network device, or may be a chip or a circuit configured in a network device. This is not limited in this application. The following uses an example in which the method is performed by the first communication apparatus for description.

The method includes: A first communication apparatus sends a first downlink frame to a terminal device, where the first downlink frame includes N first downlink subframes; the first communication apparatus receives a first uplink frame from the terminal device, where the first uplink frame includes N first uplink subframes; the first communication apparatus receives first information from the terminal device, where the first information indicates a time difference between a moment of receiving an i^{th} first downlink subframe by the terminal device and a moment of sending an i^{th} first uplink subframe by the terminal device, N is a positive integer, and i is any value from 1 to N; and the first communication apparatus sends the first information to a positioning server.

Based on the foregoing technical solution, the first information is sent to the positioning server, so that the positioning server can verify the position of the terminal device based on the time difference between the moment of receiving the i^{th} first downlink subframe by the terminal device and the moment of sending the i^{th} first uplink subframe by the terminal device.

With reference to the first aspect, in some implementations of the first aspect, the first information is a sum of a first time difference and a second time difference, the first time difference is a time difference between the moment of receiving the i^{th} first downlink subframe and a moment of sending a second uplink subframe, the moment of sending the second uplink subframe is closest to the moment of receiving the i^{th} first downlink subframe, and the second time difference is a time difference between the moment of sending the second uplink subframe and the moment of sending the i^{th} first uplink subframe.

With reference to the first aspect, in some implementations of the first aspect, the first time difference information includes a first time difference and a second time difference, the first time difference is a time difference between the moment of receiving the i^{th} first downlink subframe and a moment of sending a second uplink subframe, the moment of sending the second uplink subframe is closest to the moment of receiving the i^{th} first downlink subframe, and the second time difference is a time difference between the moment of sending the second uplink subframe and the moment of sending the i^{th} first uplink subframe.

With reference to the first aspect, in some implementations of the first aspect, before the first communication apparatus receives the first information from the terminal device, the first communication apparatus sends first indication information to the terminal device, where the first indication information indicates to send the sum of the first time difference and the second time difference, or indicates to send the first time difference and the second time difference.

With reference to the first aspect, in some implementations of the first aspect, the first communication apparatus receives a second uplink frame from the terminal device, where the second uplink frame includes N third uplink subframes; the first communication apparatus sends a second downlink frame to the terminal device, where the second downlink frame includes N second downlink subframes; and the first communication apparatus sends second information to the positioning server, where the second information indicates a time difference between a moment of receiving a j^{th} third uplink subframe and a moment of sending a j^{th} second downlink subframe, N is a positive integer, and j is any value from 1 to N.

Based on the foregoing technical solution, the second information is sent to the positioning server, so that the positioning server can determine a receive-transmit time difference on the first communication apparatus side, to verify the position of the terminal device based on the receive-transmit time difference on the first communication apparatus side.

With reference to the first aspect, in some implementations of the first aspect, the second information is a sum of a third time difference and a fourth time difference, the third time difference is a time difference between the moment of receiving the j^{th} third uplink subframe and a moment of sending a third downlink subframe, the moment of sending the third downlink subframe is closest to the moment of receiving the j^{th} third uplink subframe, and the fourth time difference is a time difference between the moment of sending the third downlink subframe and the moment of sending the j^{th} second downlink subframe.

With reference to the first aspect, in some implementations of the first aspect, the second information includes a third time difference and a fourth time difference, the third time difference is a time difference between the moment of receiving the j^{th} third uplink subframe and a moment of sending a third downlink subframe, the moment of sending the third downlink subframe is closest to the moment of receiving the j^{th} third uplink subframe, and the fourth time difference is a time difference between the moment of sending the third downlink subframe and the moment of sending the j^{th} second downlink subframe.

With reference to the first aspect, in some implementations of the first aspect, before the first communication apparatus sends the second information to the positioning server, the first communication apparatus receives second indication information from the positioning server, where the second indication information indicates to send the sum of the third time difference and the fourth time difference, or indicates to send the third time difference and the fourth time difference.

With reference to the first aspect, in some implementations of the first aspect, the first communication apparatus sends configuration information to the terminal device, where the configuration information indicates a time difference between the moment of detecting receiving of the i^{th} first downlink subframe by the terminal device and the moment of detecting sending of the i^{th} first uplink subframe by the terminal device, the configuration information is used to configure a resource for sending a reference signal, and the resource includes the i^{th} first downlink subframe.

Based on the foregoing technical solution, the configuration information indicates the time difference between the moment of detecting receiving of the i^{th} first downlink subframe by the terminal device and the moment of detecting sending of the i^{th} first uplink subframe by the third communication apparatus, so that signaling overheads can be reduced, and resources can be saved.

With reference to the first aspect, in some implementations of the first aspect, the first communication apparatus communicates with the terminal device via a second communication device. The first communication apparatus sends a first parameter to the positioning server, where the first parameter is a common timing advance for communication between the terminal device and the first communication apparatus via the second communication device.

According to a second aspect, a communication method is provided. The method may be performed by a third communication apparatus. The third communication apparatus may be a terminal device, or may be a chip or a circuit configured in the terminal device. This is not limited in this application. The following uses an example in which the method is performed by the third communication apparatus for description.

The method includes: A third communication apparatus receives a first downlink frame from a first communication apparatus, where the first downlink frame includes N first downlink subframes; the third communication apparatus sends a first uplink frame to the first communication apparatus, where the first uplink frame includes N first uplink subframes; and the third communication apparatus sends first information to the first communication apparatus, where the first information indicates a time difference between a moment of receiving an i^{th} first downlink subframe by the third communication apparatus and a moment of sending an i^{th} first uplink subframe by the third communication apparatus, N is a positive integer, and i is any value from 1 to N.

Based on the foregoing technical solution, the first information is sent to the positioning server through the third communication apparatus, so that the positioning server can verify a position of the third communication apparatus based on the time difference between the moment of receiving the i^{th} first downlink subframe by the third communication apparatus and the moment of sending the i^{th} first uplink subframe by the third communication apparatus.

With reference to the second aspect, in some implementations of the second aspect, the first information is a sum of a first time difference and a second time difference, the first time difference is a time difference between the moment of receiving the i^{th} first downlink subframe and a moment of sending a second uplink subframe, the moment of sending the second uplink subframe is closest to the moment of receiving the i^{th} first downlink subframe, and the second time difference is a time difference between the moment of sending the second uplink subframe and the moment of sending the i^{th} first uplink subframe.

With reference to the second aspect, in some implementations of the second aspect, the first time difference information includes a first time difference and a second time difference, the first time difference is a time difference between the moment of receiving the i^{th} first downlink subframe and a moment of sending a second uplink subframe, the moment of sending the second uplink subframe is closest to the moment of receiving the i^{th} first downlink subframe, and the second time difference is a time difference between the moment of sending the second uplink subframe and the moment of sending the i^{th} first uplink subframe.

With reference to the second aspect, in some implementations of the second aspect, before the third communication apparatus sends the first information to the first communication apparatus, the third communication apparatus receives first indication information from the first communication apparatus, where the first indication information indicates to send the sum of the first time difference and the second time difference, or indicates to send the first time difference and the second time difference.

With reference to the second aspect, in some implementations of the second aspect, the third communication apparatus sends a second uplink frame to the first communication apparatus, where the second uplink frame includes N third uplink subframes; and the third communication apparatus receives a second downlink frame from the first communication apparatus, where the second downlink frame includes N second downlink subframes, the second uplink frame is used by the first communication apparatus to determine second information, the second information indicates a time difference between a moment of receiving a j^{th} third uplink subframe and a moment of sending a j^{th} second downlink subframe, N is a positive integer, and j is any value from 1 to N.

Based on the foregoing technical solution, the second information is determined, so that the positioning server can determine a receive-transmit time difference on the first communication apparatus side based on the second information, to verify the position of the third communication apparatus based on the receive-transmit time difference on the first communication apparatus side.

With reference to the second aspect, in some implementations of the second aspect, the second information is a sum of a third time difference and a fourth time difference, the third time difference is a time difference between the moment of receiving the j^{th} third uplink subframe and a moment of sending a third downlink subframe, the moment of sending the third downlink subframe is closest to the moment of receiving the j^{th} third uplink subframe, and the fourth time difference is a time difference between the moment of sending the third downlink subframe and the moment of sending the j^{th} second downlink subframe.

With reference to the second aspect, in some implementations of the second aspect, the second information includes a third time difference and a fourth time difference, the third time difference is a time difference between the moment of receiving the j^{th} third uplink subframe and a moment of sending a third downlink subframe, the moment of sending the third downlink subframe is closest to the moment of receiving the j^{th} third uplink subframe, and the fourth time difference is a time difference between the moment of sending the third downlink subframe and the moment of sending the j^{th} second downlink subframe.

With reference to the second aspect, in some implementations of the second aspect, the third communication apparatus receives configuration information from the first communication apparatus, where the configuration information indicates a time difference between the moment of detecting receiving of the i^{th} first downlink subframe by the third communication apparatus and the moment of detecting sending of the i^{th} first uplink subframe by the third communication apparatus, the configuration information is used to configure a resource for sending a reference signal, and the resource includes the i^{th} first downlink subframe.

Based on the foregoing technical solution, the configuration information indicates the time difference between the moment of detecting receiving of the i^{th} first downlink subframe by the third communication apparatus and the moment of detecting sending of the i^{th} first uplink subframe by the third communication apparatus, so that signaling overheads can be reduced, and resources can be saved.

According to a third aspect, a communication method is provided. The method may be performed by a positioning server, and the method may be performed by the positioning server.

The method includes: A positioning server receives first information from a first communication apparatus, where the first information indicates a time difference between a moment of receiving an i^{th} first downlink subframe in a first downlink frame by a terminal device and a moment of sending an i^{th} first uplink subframe in a first uplink frame by the terminal device, the first downlink frame includes N first downlink subframes, the first uplink frame includes N first uplink subframes, N is a positive integer, and i is any value from 1 to N; and; the positioning server verifies a position of the terminal device based on the first information.

Based on the foregoing technical solution, the positioning server may determine, by receiving the first information, the time difference between the moment of receiving the i^{th} first downlink subframe by the terminal device and the moment of sending the i^{th} first uplink subframe by the terminal device, to verify the position of the terminal device.

With reference to the third aspect, in some implementations of the third aspect, the first information is a sum of a first time difference and a second time difference, the first time difference is a time difference between the moment of receiving the i^{th} first downlink subframe and a moment of sending a second uplink subframe, the moment of sending the second uplink subframe is closest to the moment of receiving the i^{th} first downlink subframe, and the second time difference is a time difference between the moment of sending the second uplink subframe and the moment of sending the i^{th} first uplink subframe.

With reference to the third aspect, in some implementations of the third aspect, the first time difference information includes a first time difference and a second time difference, the first time difference is a time difference between the moment of receiving the i^{th} first downlink subframe and a moment of sending a second uplink subframe, the moment of sending the second uplink subframe is closest to the moment of receiving the i^{th} first downlink subframe, and the second time difference is a time difference between the moment of sending the second uplink subframe and the moment of sending the i^{th} first uplink subframe.

With reference to the third aspect, in some implementations of the third aspect, the positioning server receives second information from the first communication apparatus, where the second information indicates a time difference between a moment of receiving a j^{th} third uplink subframe in a second uplink frame and a moment of sending a j^{th} second downlink subframe in a second downlink frame, the second uplink frame includes N third uplink subframes, the second downlink frame includes N second uplink subframes, N is a positive integer, and j is any value from 1 to N. The positioning server verifies the position of the terminal device based on the first information and the second parameter.

With reference to the third aspect, in some implementations of the third aspect, the second information is a sum of a third time difference and a fourth time difference, the third time difference is a time difference between the moment of receiving the j^{th} third uplink subframe and a moment of sending a third downlink subframe, the moment of sending the third downlink subframe is closest to the moment of receiving the j^{th} third uplink subframe, and the fourth time difference is a time difference between the moment of sending the third downlink subframe and the moment of sending the j^{th} second downlink subframe.

With reference to the third aspect, in some implementations of the third aspect, the second information includes a third time difference and a fourth time difference, the third time difference is a time difference between the moment of receiving the j^{th} third uplink subframe and a moment of sending a third downlink subframe, the moment of sending the third downlink subframe is closest to the moment of receiving the j^{th} third uplink subframe, and the fourth time difference is a time difference between the moment of sending the third downlink subframe and the moment of sending the j^{th} second downlink subframe.

With reference to the third aspect, in some implementations of the third aspect, before the positioning server receives the second information from the first communication apparatus, the positioning server sends second indication information to the first communication apparatus, where the second indication information indicates to send the sum of the third time difference and the fourth time difference, or indicates to send the third time difference and the fourth time difference.

With reference to the third aspect, in some implementations of the third aspect, the first communication apparatus communicates with the terminal device via a second communication device. The positioning server receives a first parameter from the first communication apparatus, where the first parameter is a common timing advance for communication between the terminal device and the first communication apparatus via the second communication device; and the positioning server verifies the position of the terminal device based on the first information and the first parameter.

According to a fourth aspect, a communication apparatus is provided. The communication apparatus includes a transceiver unit. The transceiver unit is configured to: send a first downlink frame to a terminal device, where the first downlink frame includes N first downlink subframes; receive a first uplink frame from the terminal device, where the first uplink frame includes N first uplink subframes; receive first information from the terminal device, where the first information indicates a time difference between a moment of receiving an i^{th} first downlink subframe by the terminal device and a moment of sending an i^{th} first uplink subframe by the terminal device, N is a positive integer, and i is any value from 1 to N; and send the first information to a positioning server.

With reference to the fourth aspect, in some implementations of the fourth aspect, the first information is a sum of a first time difference and a second time difference, the first time difference is a time difference between the moment of receiving the i^{th} first downlink subframe and a moment of sending a second uplink subframe, the moment of sending the second uplink subframe is closest to the moment of receiving the i^{th} first downlink subframe, and the second time difference is a time difference between the moment of sending the second uplink subframe and the moment of sending the i^{th} first uplink subframe.

With reference to the fourth aspect, in some implementations of the fourth aspect, the first time difference information includes a first time difference and a second time difference, the first time difference is a time difference between the moment of receiving the i^{th} first downlink subframe and a moment of sending a second uplink subframe, the moment of sending the second uplink subframe is closest to the moment of receiving the i^{th} first downlink subframe, and the second time difference is a time difference between the moment of sending the second uplink subframe and the moment of sending the i^{th} first uplink subframe.

With reference to the fourth aspect, in some implementations of the fourth aspect, before the first communication apparatus receives the first information from the terminal device, the first communication apparatus sends first indication information to the terminal device, where the first indication information indicates to send the sum of the first time difference and the second time difference, or indicates to send the first time difference and the second time difference.

With reference to the fourth aspect, in some implementations of the fourth aspect, the transceiver unit is further configured to: receive a second uplink frame from the terminal device, where the second uplink frame includes N third uplink subframes; send a second downlink frame to the terminal device, where the second downlink frame includes N second downlink subframes; and send second information to the positioning server, where the second information indicates a time difference between a moment of receiving a j^{th} third uplink subframe and a moment of sending a j^{th} second downlink subframe, N is a positive integer, and j is any value from 1 to N.

With reference to the fourth aspect, in some implementations of the fourth aspect, the second information is a sum of a third time difference and a fourth time difference, the third time difference is a time difference between the moment of receiving the j^{th} third uplink subframe and a moment of sending a third downlink subframe, the moment of sending the third downlink subframe is closest to the moment of receiving the j^{th} third uplink subframe, and the fourth time difference is a time difference between the moment of sending the third downlink subframe and the moment of sending the j^{th} second downlink subframe.

With reference to the fourth aspect, in some implementations of the fourth aspect, the second information includes a third time difference and a fourth time difference, the third time difference is a time difference between the moment of receiving the j^{th} third uplink subframe and a moment of sending a third downlink subframe, the moment of sending the third downlink subframe is closest to the moment of receiving the j^{th} third uplink subframe, and the fourth time difference is a time difference between the moment of sending the third downlink subframe and the moment of sending the j^{th} second downlink subframe.

With reference to the fourth aspect, in some implementations of the fourth aspect, the transceiver unit is further configured to receive second indication information from the positioning server, where the second indication information indicates to send the sum of the third time difference and the fourth time difference, or indicates to send the third time difference and the fourth time difference.

With reference to the fourth aspect, in some implementations of the fourth aspect, the transceiver unit is further configured to send configuration information to the terminal device, where the configuration information indicates a time difference between the moment of detecting receiving of the i^{th} first downlink subframe by the terminal device and the moment of detecting sending of the i^{th} first uplink subframe by the terminal device, the configuration information is used to configure a resource for sending a reference signal, and the resource includes the i^{th} first downlink subframe.

With reference to the fourth aspect, in some implementations of the fourth aspect, the apparatus communicates with the terminal device via a second communication device, and the transceiver unit is further configured to send a first parameter to the positioning server, where the first parameter is a common timing advance for communication between the terminal device and the apparatus via the second communication device.

According to a fifth aspect, a communication apparatus is provided. The apparatus includes a transceiver unit. The transceiver unit is configured to: receive a first downlink frame from a first communication apparatus, where the first downlink frame includes N first downlink subframes; send a first uplink frame to the first communication apparatus, where the first uplink frame includes N first uplink subframes; and send first information to the first communication apparatus, where the first information indicates a time difference between a moment of receiving an i^{th} first downlink subframe by the terminal device and a moment of sending an i^{th} first uplink subframe by the terminal device, N is a positive integer, and i is any value from 1 to N.

With reference to the fifth aspect, in some implementations of the fifth aspect, the first information is a sum of a first time difference and a second time difference, the first time difference is a time difference between the moment of receiving the i^{th} first downlink subframe and a moment of sending a second uplink subframe, the moment of sending the second uplink subframe is closest to the moment of receiving the i^{th} first downlink subframe, and the second time difference is a time difference between the moment of sending the second uplink subframe and the moment of sending the i^{th} first uplink subframe.

With reference to the fifth aspect, in some implementations of the fifth aspect, the first time difference information includes a first time difference and a second time difference, the first time difference is a time difference between the moment of receiving the i^{th} first downlink subframe and a moment of sending a second uplink subframe, the moment of sending the second uplink subframe is closest to the moment of receiving the i^{th} first downlink subframe, and the second time difference is a time difference between the moment of sending the second uplink subframe and the moment of sending the i^{th} first uplink subframe.

With reference to the fifth aspect, in some implementations of the fifth aspect, the transceiver unit is further configured to receive first indication information from the first communication apparatus, where the first indication information indicates to send the sum of the first time difference and the second time difference, or indicates to send the first time difference and the second time difference.

With reference to the fifth aspect, in some implementations of the fifth aspect, the transceiver unit is further configured to: send a second uplink frame to the first communication apparatus, where the second uplink frame includes N third uplink subframes; and receive a second downlink frame from the first communication apparatus, where the second downlink frame includes N second downlink subframes, the second uplink frame is used by the first communication apparatus to determine second information, the second information indicates a time difference between a moment of receiving a j^{th} third uplink subframe and a moment of sending a j^{th} second downlink subframe, N is a positive integer, and j is any value from 1 to N.

With reference to the fifth aspect, in some implementations of the fifth aspect, the second information is a sum of a third time difference and a fourth time difference, the third time difference is a time difference between the moment of receiving the j^{th} third uplink subframe and a moment of sending a third downlink subframe, the moment of sending the third downlink subframe is closest to the moment of receiving the j^{th} third uplink subframe, and the fourth time difference is a time difference between the moment of sending the third downlink subframe and the moment of sending the j^{th} second downlink subframe.

With reference to the fifth aspect, in some implementations of the fifth aspect, the second information includes a third time difference and a fourth time difference, the third time difference is a time difference between the moment of receiving the j^{th} third uplink subframe and a moment of sending a third downlink subframe, the moment of sending the third downlink subframe is closest to the moment of receiving the j^{th} third uplink subframe, and the fourth time difference is a time difference between the moment of sending the third downlink subframe and the moment of sending the j^{th} second downlink subframe.

With reference to the fifth aspect, in some implementations of the fifth aspect, the transceiver unit is further configured to receive configuration information from the first communication apparatus, where the configuration information indicates a time difference between the moment of detecting receiving of the i^{th} first downlink subframe by the apparatus and the moment of detecting sending of the i^{th} first uplink subframe by the apparatus, the configuration information is used to configure a resource for sending a reference signal, and the resource includes the i^{th} first downlink subframe.

According to a sixth aspect, a communication apparatus is provided. The apparatus includes a transceiver unit and a processing unit. The transceiver unit is configured to receive first information from a first communication apparatus, where the first information indicates a time difference between a moment of receiving an i^{th} first downlink subframe in a first downlink frame by a terminal device and a moment of sending an i^{th} first uplink subframe in a first uplink frame by the terminal device, the first downlink frame includes N first downlink subframes, the first uplink frame includes N first uplink subframes, N is a positive integer, and i is any value from 1 to N. The processing unit is configured to verify a position of the terminal device based on the first information.

With reference to the sixth aspect, in some implementations of the sixth aspect, the first information is a sum of a first time difference and a second time difference, the first time difference is a time difference between the moment of receiving the i^{th} first downlink subframe and a moment of sending a second uplink subframe, the moment of sending the second uplink subframe is closest to the moment of receiving the i^{th} first downlink subframe, and the second time difference is a time difference between the moment of sending the second uplink subframe and the moment of sending the i^{th} first uplink subframe.

With reference to the sixth aspect, in some implementations of the sixth aspect, the first time difference information includes a first time difference and a second time difference, the first time difference is a time difference between the moment of receiving the i^{th} first downlink subframe and a moment of sending a second uplink subframe, the moment of sending the second uplink subframe is closest to the moment of receiving the i^{th} first downlink subframe, and the second time difference is a time difference between the moment of sending the second uplink subframe and the moment of sending the i^{th} first uplink subframe.

With reference to the sixth aspect, in some implementations of the sixth aspect, the transceiver unit is further configured to receive second information from the first communication apparatus, where the second information indicates a time difference between a moment of receiving a j^{th} third uplink subframe in a second uplink frame and a moment of sending a j^{th} second downlink subframe in a second downlink frame, the second uplink frame includes N third uplink subframes, the second downlink frame includes N second uplink subframes, N is a positive integer, and j is any value from 1 to N. The processing unit is specifically configured to verify the position of the terminal device based on the first information and the second parameter.

With reference to the sixth aspect, in some implementations of the sixth aspect, the second information is a sum of a third time difference and a fourth time difference, the third time difference is a time difference between the moment of receiving the j^{th} third uplink subframe and a moment of sending a third downlink subframe, the moment of sending the third downlink subframe is closest to the moment of receiving the j^{th} third uplink subframe, and the fourth time difference is a time difference between the moment of sending the third downlink subframe and the moment of sending the j^{th} second downlink subframe.

With reference to the sixth aspect, in some implementations of the sixth aspect, the second information includes a third time difference and a fourth time difference, the third time difference is a time difference between the moment of receiving the j^{th} third uplink subframe and a moment of sending a third downlink subframe, the moment of sending the third downlink subframe is closest to the moment of receiving the j^{th} third uplink subframe, and the fourth time difference is a time difference between the moment of sending the third downlink subframe and the moment of sending the j^{th} second downlink subframe.

With reference to the sixth aspect, in some implementations of the sixth aspect, the transceiver unit is further configured to send second indication information to the first communication apparatus, where the second indication information indicates to send the sum of the third time difference and the fourth time difference, or indicates to send the third time difference and the fourth time difference.

With reference to the sixth aspect, in some implementations of the sixth aspect, the first communication apparatus communicates with the terminal device via a second communication device. The transceiver unit is further configured to receive a first parameter from the first communication apparatus, where the first parameter is a common timing advance for communication between the terminal device and the first communication apparatus via the second communication device; and the processing unit is specifically configured to verify the position of the terminal device based on the first information and the first parameter.

According to a seventh aspect, a communication apparatus is provided, and includes a processor. The processor is coupled to a memory, and may be configured to execute instructions in the memory, to implement the method according to any one of the first aspect and the possible implementations of the first aspect. Optionally, the communication apparatus further includes the memory. Optionally, the communication apparatus further includes a communication interface, and the processor is coupled to the communication interface.

In an implementation, the communication apparatus is a first communication apparatus. When the communication apparatus is the first communication apparatus, the communication interface may be a transceiver or an input/output interface.

In another implementation, the communication apparatus is a chip configured in the first communication apparatus. When the communication apparatus is the chip configured in the first communication apparatus, the communication interface may be an input/output interface.

Optionally, the transceiver may be a transceiver circuit. Optionally, the input/output interface may be an input/output circuit.

According to an eighth aspect, a communication apparatus is provided, and includes a processor. The processor is coupled to a memory, and may be configured to execute instructions in the memory, to implement the method according to any one of the second aspect and the possible implementations of the second aspect. Optionally, the communication apparatus further includes the memory. Optionally, the communication apparatus further includes a communication interface, and the processor is coupled to the communication interface.

In an implementation, the communication apparatus is a terminal device. When the communication apparatus is the terminal device, the communication interface may be a transceiver or an input/output interface.

In another implementation, the communication apparatus is a chip configured in the terminal device. When the communication apparatus is the chip configured in the terminal device, the communication interface may be an input/output interface.

Optionally, the transceiver may be a transceiver circuit. Optionally, the input/output interface may be an input/output circuit.

According to a ninth aspect, a communication apparatus is provided, and includes a processor. The processor is coupled to a memory, and may be configured to execute instructions in the memory, to implement the method according to any one of the third aspect and the possible implementations of the third aspect. Optionally, the communication apparatus further includes the memory. Optionally, the communication apparatus further includes a communication interface, and the processor is coupled to the communication interface.

In an implementation, the communication apparatus is a positioning server. When the communication apparatus is the positioning server, the communication interface may be a transceiver or an input/output interface.

In another implementation, the communication apparatus is a chip configured in the positioning server. When the communication apparatus is the chip configured in the positioning server, the communication interface may be an input/output interface.

According to a tenth aspect, a processor is provided, including an input circuit, an output circuit, and a processing circuit. The processing circuit is configured to: receive a signal through the input circuit; and transmit a signal through the output circuit, to enable the processor to perform the method according to any possible implementation of the first aspect to the third aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eleventh aspect, a processing apparatus is provided. The processing apparatus includes a processor and a memory. The processor is configured to: read instructions stored in the memory; receive a signal through a receiver; and transmit a signal through a transmitter, to perform the method according to any possible implementation of the first aspect to the third aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated into one chip, or may be respectively disposed in different chips. A type of the memory and a manner in which the memory and the processor are disposed are not limited in embodiments of this application.

It should be understood that a related data exchange process, for example, sending indication information, may be a process of outputting the indication information from the processor, and receiving capability information, may be a process of receiving the input capability information by the processor. Specifically, data output by the processor may be output to the transmitter, and input data received by the processor may be from the receiver. The transmitter and the receiver may be collectively referred to as a transceiver.

The processing apparatus in the eleventh aspect may be one or more chips. The processor in the processing apparatus may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a twelfth aspect, a computer program product is provided. The computer program product includes a computer program (which may also be referred to as code or instructions). When the computer program runs, a computer is enabled to perform the method according to any possible implementation of the first aspect to the third aspect.

According to a thirteenth aspect, a computer-readable storage medium is provided. The computer-readable storage medium stores a computer program (which may also be referred to as code or instructions). When the computer program runs on a computer, the method according to any possible implementation of the first aspect to the third aspect is implemented.

According to a fourteenth aspect, a communication system is provided, including at least one of the foregoing first communication apparatus, third communication apparatus, and positioning server.

### BRIEF DESCRIPTION OF DRAWINGS

FIG. 1 is a diagram of an architecture of satellite communication;
FIG. 2 is a diagram of a communication system to which an embodiment of this application is applicable;
FIG. 3 is a diagram of a round trip time between UE and a gNB;
FIG. 4 is a diagram of an application scenario of a positioning method;
FIG. 5 is a diagram of an application scenario of another positioning method;
FIG. 6 is a schematic flowchart of a communication method 600 according to an embodiment of this application;
FIG. 7 is a block diagram of a communication apparatus 700 according to an embodiment of this application;
FIG. 8 is a block diagram of a communication apparatus 800 according to an embodiment of this application; and
FIG. 9 is a block diagram of a chip system 900 according to an embodiment of this application.

### DESCRIPTION OF EMBODIMENTS

The following describes technical solutions of embodiments in this application with reference to accompanying drawings.

The technical solutions in embodiments of this application may be applied to various communication systems such as global system for mobile communications (Global System for Mobile communications, GSM) system, a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a machine to machine (machine to machine, M2M) communication system, a non-terrestrial network (non-terrestrial network, NTN) system, a 5^{th} generation (5^{th} Generation, 5G) mobile communication system, a new radio (New Radio, NR) system, or a future wireless communication system. The NTN system may also be referred to as a satellite communication system. In addition, the non-terrestrial communication system may further include a high-altitude platform station (high altitude platform station, HAPS) communication system.

The NTN system refers to a communication network that uses an air platform or a space platform as a transmission device relay node or a base station. The air platform or the space platform includes, but not limited to, an uncrewed aerial vehicle, a hot air balloon, an airplane, a satellite, and the like.

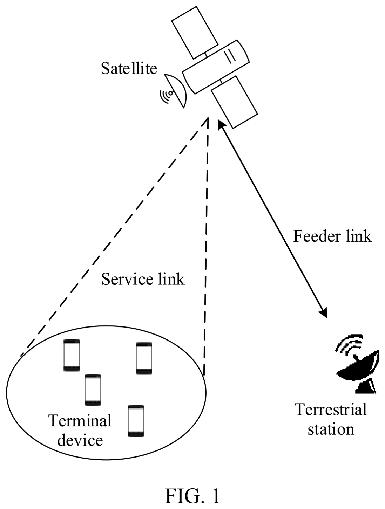

FIG. 1 is a diagram of an architecture of NTN communication. As shown in FIG. 1, satellite communication is used as an example. In this scenario, a terrestrial station (gateway, GW), a satellite, user equipment (user equipment, UE), and the like may be included. A terrestrial station in an NTN system can provide a function similar to that of a gateway in a terrestrial communication system, for example, establishing a connection to UE and communicating with a server. For distinction from the terrestrial communication system, the gateway is referred to as a terrestrial station herein. The terrestrial station also has functions such as monitoring and fault query for a satellite, and packet switching and interface protocol conversion for communication data. The terrestrial station is connected to a core network. A link between the terrestrial station and the satellite is referred to as a feeder link (feeder link). A link between the satellite and the user equipment is referred to as a service link (service link). Usually, the satellite may have two operating modes, which are respectively a transparent (transparent) mode and a regenerative mode. In the transparent mode, data of a terminal device usually reaches the terrestrial station through the satellite, and then reaches a destination through the terrestrial station. Usually, because a distance between the satellite and the terminal device on the ground is long, for example, more than 1000 kilometers, a transmission delay is large when the satellite transmits data in the operating mode. In the regenerative mode, the satellite may perform filtering, frequency amplification, and signal amplification on a radio signal, and may also involve signal demodulation, decoding, data packet switching or routing, and encoding and modulation. Therefore, a satellite operating in the regenerative mode basically has some or all functions of a base station in a cellular network.

It should be understood that user equipment (user equipment, UE) in embodiments of this application may be referred to as a terminal device, and is a device that provides voice/data connectivity for a user, for example, a handheld device or an in-vehicle device with a wireless connection function. Currently, examples of some terminals may be as follows: a mobile phone (mobile phone), a tablet computer (pad), a computer (for example, a laptop or a palmtop computer) with a wireless transceiver function, a mobile internet device (mobile Internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city, a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, an in-vehicle device, a wearable device, a terminal device in a 5G network, or a terminal device in a future evolved PLMN.

The wearable device may also be referred to as a wearable intelligent device, and is a general term of wearable devices such as glasses, gloves, watches, clothes, and shoes that are developed by applying wearable technologies to intelligent designs of daily wear. The wearable device is a portable device that can be directly worn on a body or integrated into clothes or an accessory of a user. The wearable device is not only a hardware device, but also can implement a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands or smart jewelry for monitoring physical signs.

In addition, the terminal device may alternatively be a terminal device in an internet of things (Internet of things, IoT) system. The IoT is an important part of future information technology development. A main technical feature of the IoT is to connect things to a network by using a communication technology, to implement a smart network for human-machine interconnection and thing-thing interconnection. In an IoT technology, massive connections, deep coverage, and power saving of a terminal may be implemented by using, for example, a narrowband (narrowband, NB) technology.

It should be understood that an example of an NTN communication scenario is described in FIG. 1. In embodiments of this application, an example in which a communication apparatus is a satellite is used. However, the communication apparatus in embodiments of this application is not limited thereto. Alternatively, the communication apparatus in this application may be a terrestrial station, a high altitude platform, an unmanned aerial vehicle in NTN communication, a terminal device that functions as a base station function in device-to-device (Device-to-Device, D2D) communication, or the like.

In addition, the communication apparatus in embodiments of this application may be a device configured to communicate with a terminal device. The communication apparatus in embodiments of this application may also be referred to as a network device. The communication apparatus may be a base transceiver station (Base Transceiver Station, BTS) in a global system for mobile communications (Global System for Mobile communications, GSM) system or a code division multiple access (Code Division Multiple Access, CDMA) system, may be a NodeB (NodeB, NB) in a wideband code division multiple access (Wideband Code Division Multiple Access, WCDMA) system, may be an evolved NodeB (Evolved NodeB, eNB or eNodeB) in an LTE system, or may be a radio controller in a cloud radio access network (Cloud Radio Access Network, CRAN) scenario. Alternatively, the communication apparatus may be a relay station, an access point, an in-vehicle device, a wearable device, a communication apparatus in a 5G network, a communication apparatus in a future evolved PLMN network, or the like. This is not limited in embodiments of this application.

It should be understood that a communication apparatus in the wireless communication system may be any device with a wireless transceiver function. The device includes but is not limited to a base station controller (Base Station Controller, BSC), a base transceiver station (Base Transceiver Station, BTS), or the like. Alternatively, the device may be one antenna panel or a group of antenna panels (including a plurality of antenna panels) of a base station in a 5G system, a satellite, or the like.

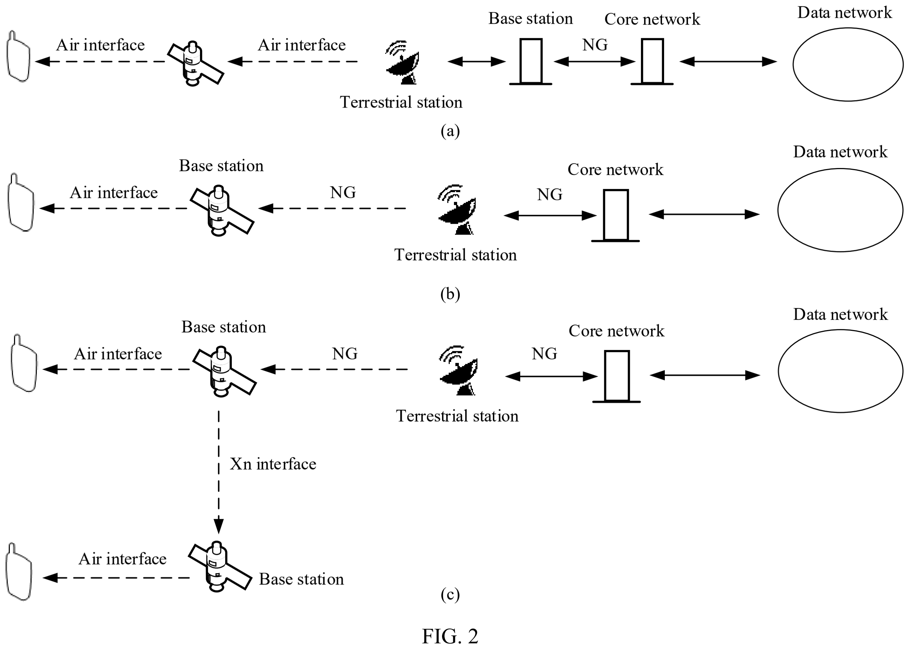

The solutions provided in this application may be applied to a satellite communication scope. For example, members of the 3GPP integrate satellite communication and 5G technologies. FIG. 2 shows a network application architecture of the technology. A terrestrial mobile terminal device UE accesses a network through air interfaces, where the air interfaces may be various types of air interfaces, for example, a 5G air interface. As shown in (a) in FIG. 2, the base station may be deployed on the ground, and is connected to the terrestrial station that communicates with the satellite. Alternatively, as shown in (b) in FIG. 2, the base station may be deployed on the satellite. The satellite is connected to the terrestrial station through a radio link, the terrestrial station and the ground base station are connected to the core network through a wired or radio link, and a radio link may exist between the satellites, as shown in (c) in FIG. 2. If the satellite has only a transparent forwarding function (that is, a corresponding base station is deployed on the ground), only the transparent forwarding function is implemented between the satellites. If the base station or some base station functions are deployed on the satellite, signaling exchange and user data transmission between the base stations may be completed between the satellites. Network elements and interfaces between the network elements in the figure are described as follows.

Terminal device: Refer to the foregoing descriptions of the terminal device. In addition, the terminal device may access a satellite network through an air interface and initiate a service, for example, a call or internet access.

Base station: The base station mainly provides a wireless access service, schedules a wireless resource for an accessed terminal device, and provides a reliable wireless transmission protocol, data encryption protocol, and the like.

Core network: The core network provides services such as user access control, mobility management, session management, user security authentication, and charging. The core network includes a plurality of functional units, and can be divided into a control-plane functional entity and a data-plane functional entity. An access and mobility management function (AMF) unit is responsible for user access management, security authentication, and mobility management. A user plane function (UPF) unit is responsible for managing functions such as user plane data transmission and traffic statistics collection.

Terrestrial station: The terrestrial station is responsible for forwarding signaling and service data between the satellite base station and the 5G core network.

Air interface: The air interface a radio link between a terminal device and a base station.

Xn interface: The Xn interface is an interface between 5G base stations, and is mainly used for exchanging signaling, for example, handover.

NG interface: The NG interface is an interface between a 5G base station and a 5G core network, and is mainly used to exchange non-access stratum (non-access stratum, NAS) signaling and user service data of a core network.

There are a plurality of existing methods for positioning a terminal device through a terrestrial network, for example, positioning the terminal device through a delay, a delay difference, a receiving angle, and the like of a reference signal. The following describes several common positioning methods.

### 1. Downlink time difference of arrival (downlink time difference of arrival, DL-TDOA)

A downlink DL signal used for the DL-TDOA may be a positioning reference signal (Positioning reference signal, PRS). UE measures a receive time difference of the PRSs from different transmit-receive points (transmit-receive Points, TRPs) or gNBs and reports the receive time difference of the PRSs to a positioning server. The positioning server then calculates a position of the UE by using known positions of the TRPs or gNBs and the receive time difference of the PRSs.

### 2. Uplink time difference of arrival (uplink time difference of arrival, UL-TDOA)

In a UL-TDOA positioning technology, UE sends a sounding reference signal (sounding reference signal, SRS). Correspondingly, a plurality of TRPs receive the SRS, and report relative time differences of arrival to a positioning server. The positioning server then uses the time differences of arrival measurements of the reference signal and known positions of the TRPs to estimate a position of the UE.

### 3. Multi-round trip time (multi-round trip time, Multi-RTT)

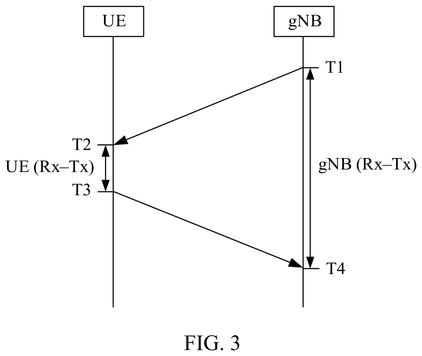

The multi-round trip time is a round trip time (round trip time, RTT) that is between UE and a plurality of TRPs and that is estimated based on a time interval between sending a signal and receiving a signal. As shown in FIG. 3, a base station determines that a time difference between sending a PRS and receiving an SRS is T4-T1=gNB (Tx-Rx), and UE determines that a time difference between receiving a PRS and sending an SRS is T3-T2=UE (Rx-Tx). In this case, the RTT between the UE and the TRP is equal to gNB (Tx-Rx)-UE (Rx Tx). Through multiple times of measurements, a measurement result is sent to a positioning server, so that the positioning server can obtain a position of the UE through calculation based on the RTT.

The time difference of arrival TDOA positioning technology requires synchronization between a user and a base station. The multi-RTT can determine the position of the UE based on reference signals that are sent between the UE and a plurality of TRPs or gNBs and based on data such as a time difference between receiving a signal by the UE and sending a signal by the UE and a time difference between receiving a signal by the gNB and sending a signal by the gNB. This positioning method is not affected by inter-base-station synchronization precision.

The following describes a method for calculating an RTT between UE and a gNB in a terrestrial network.

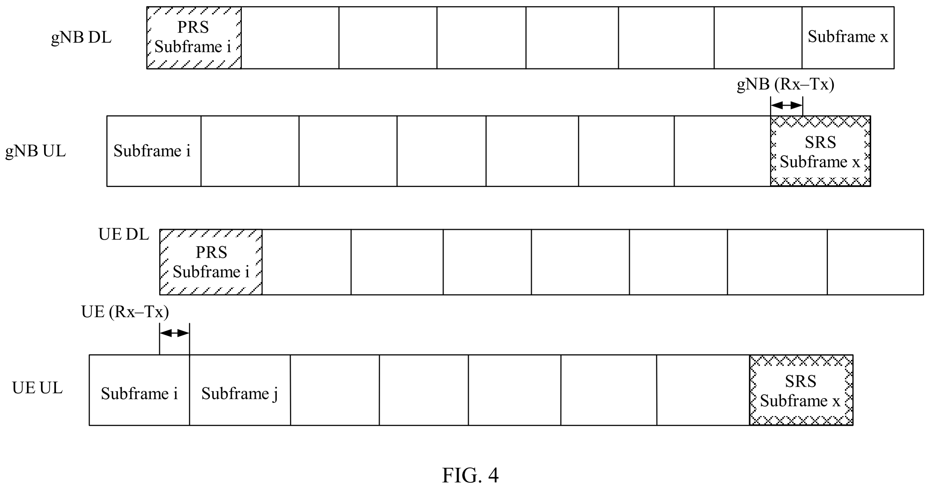

As shown in FIG. 4, the gNB sends a downlink DL subframe i to the UE, and the DL subframe i may carry a PRS. The UE needs to send an uplink UL subframe i in advance based on a boundary of the DL subframe i, where duration in which the UE sends the uplink UL subframe i in advance is a timing advance (timing advance, TA). In this way, the DL subframe i and the UL subframe i are aligned on a gNB side. In an ideal case, the TA may be twice a delay between the UE and the gNB, that is, a round trip time. If the TA of the UE has an offset, the gNB needs to determine an actual TA of the UE based on a receive-transmit time difference of the UE and a receive-transmit time difference of the gNB. The receive-transmit time difference UE (Rx Tx) of the UE may be a time difference between a moment of receiving a DL subframe i by the UE and a moment of sending a UL subframe j by the UE, and the subframe j is closest to the received DL subframe i in terms of time. The receive-transmit time difference gNB (Rx-Tx) of the gNB may be a time difference between a moment of receiving a UL subframe x by the gNB and a moment of sending a DL subframe x by the gNB, where the DL subframe x is closest to the received UL subframe x in terms of time, and the UL subframe x may carry sounding reference signal (sounding reference signal, SRS). The actual TA of the UE may be a difference between the TA of the UE and |gNB (Rx-Tx)|, where the TA of the UE is a difference between a length of one subframe and UE (Rx Tx), or is UE (Rx Tx).

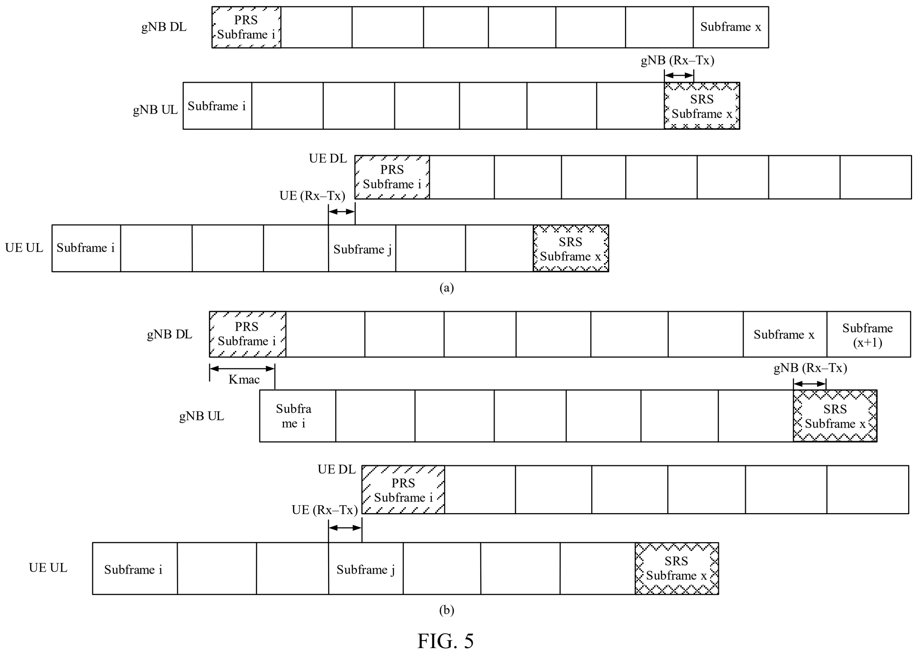

Usually, the timing advance of the UE in the terrestrial network does not exceed one subframe, and a change is small. Therefore, the RTT between the UE and the gNB may be determined according to the foregoing method, and is used by a network side to verify a position of the UE. However, in a satellite communication scenario, the timing advance of the UE is usually large and changes in real time. For example, as shown in FIG. 5, the timing advance of the UE exceeds a length of one subframe, and the UE and the gNB may not be able to calculate the timing advance and the round trip time according to Rx-Tx specified in the existing standard, that is, UE (Tx-Rx) and gNB (Tx-Rx) that are the same as those of UE (Tx-Rx) and gNB (Tx-Rx) in FIG. 4 in meaning. (a) in FIG. 5 shows a scenario (Kmac=0) in which a synchronization point is in the gNB. (b) in FIG. 5 shows a scenario (Kmac≠0) in which a synchronization point is not in the gNB. Kmac is a scheduling offset provided by the network side. In this way, the foregoing method may not be applicable to the satellite communication scenario.

Positioning of a ground terminal device in the existing satellite communication scenario is usually implemented through a dedicated positioning satellite, and the positioning satellite is mainly used by the terminal device to position the terminal device. The terminal device reports position information of the terminal device to a network side. However, the position information reported by the ground terminal device may be tampered with, or the reported position information is affected by interference and has a large error. Therefore, how to implement positioning of the ground terminal device by the network side or verification of the position information reported by the ground terminal device is a problem that needs to be resolved.

In view of this, an embodiment of this application provides a communication method, which may be applied to positioning or position verification of a terminal device in a satellite communication scenario.

For ease of understanding embodiments of this application, the following descriptions are provided.

In embodiments of this application, "at least two" means two or more. The term "and/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" usually represents an "or" relationship between associated objects.

It may be understood that various numbers in embodiments of this application are merely used for differentiation for ease of description, and are not used to limit the scope of embodiments of this application. The sequence numbers of the foregoing processes do not mean execution sequences. The execution sequences of the processes should be determined based on functions and internal logic of the processes, and should not constitute any limitation on implementation processes of embodiments of this application.

In embodiments of this application, "first", "second", and various numbers are used for differentiation for ease of description, and are not used to limit the scope of embodiments of this application. For example, the terms are used to distinguish between different indication information.

In embodiments of this application, "used to indicate" may include "directly indicate" and "indirectly indicate". When a piece of indication information indicates A, the indication information may directly indicate A or indirectly indicate A, but it does not indicate that the indication information definitely carries A.

Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

In embodiments of this application, descriptions such as "when...", "in a case of...", and "if" all mean that a device performs corresponding processing in an objective case, and are not limited to time, and the device is not required to perform a determining action during implementation. This does not mean that there is another limitation.

The "indication information" and the "configuration information" in embodiments of this application may be an explicit indication, to be specific, a direct indication by using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

It should be understood that a positioning server in this application is responsible for a position-related information service of the terminal device, including providing assistance information for the terminal device to perform position measurement, or processing position measurement information reported by the terminal device or a base station and calculating final coordinates, a position movement speed, and the like. The positioning server may be a position management network element. For example, in a 5G communication system, the position management network element may be an LMF network element. In a future communication system, the position management network element may still be an LMF network element or have another name. This is not limited in this application. The positioning server may be located in a core network, or may be located in a network device.

It should be understood that the "reference signal used for positioning" in this application is collectively denoted as a "reference signal", but this does not mean that the "reference signal" includes only a reference signal (positioning reference signal, PRS) specially used for positioning. Optionally, the "reference signal used for positioning" may further include a sounding reference signal (sounding reference signaling, SRS), a demodulation reference signal (demodulation reference signal, DMRS), a tracking reference signal (tracking reference signal, TRS), a channel state information reference signal (channel state information reference signal, CSI-RS), and the like.

It should be understood that a downlink frame or an uplink frame mentioned in this embodiment of this application is merely an example, and the frame may be replaced with a time unit. Similarly, the downlink subframe or the uplink subframe mentioned in this embodiment of this application is merely an example. The subframe may be replaced with a time domain resource, and the time domain resource may alternatively be a slot (slot), a symbol, a mini-subframe, or a mini-slot. This is not specifically limited in this application.

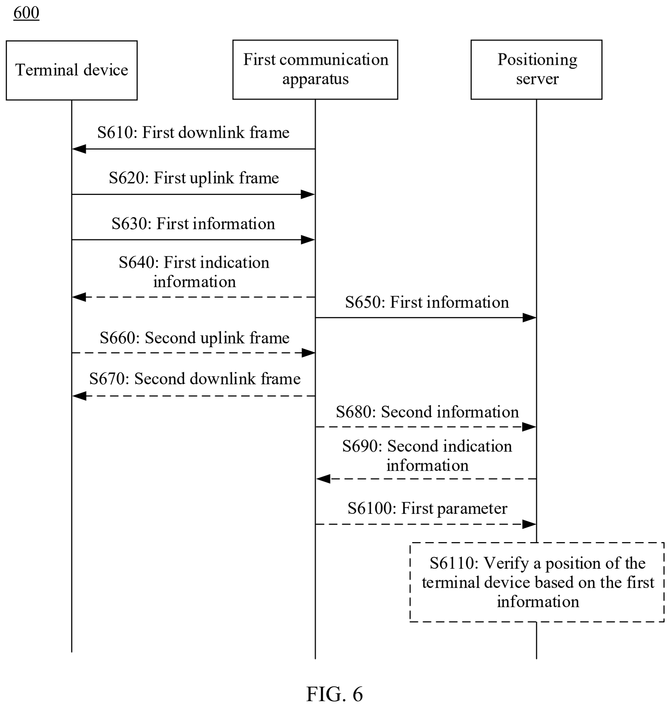

FIG. 6 is shows an example of a schematic flowchart of a communication method 600 according to an embodiment of this application. The method 600 includes at least the following steps.

S610: A first communication apparatus sends a first downlink frame to a terminal device (an example of a third communication apparatus). Correspondingly, the terminal device receives the first downlink frame from the first communication apparatus.

The first downlink frame includes N first downlink subframes. An i^{th} first downlink subframe in the N first downlink subframes may be used to carry a reference signal, for example, a PRS; or a i^{th} first downlink subframe is configured as a reference signal resource by using configuration information. A network device and/or the terminal device may determine a parameter related to the i^{th} first downlink subframe based on the configuration information (for example, determine a moment of sending the i^{th} first downlink subframe through a boundary of the i^{th} first downlink subframe). In other words, the configuration information is used to configure reference signal resources, but actually, reference signals do not need to be sent on these resources. The network device and/or the terminal device may directly determine related parameters based on boundaries of subframes corresponding to these resources, thereby reducing signaling overheads. N is a positive integer, and i is any value from 1 to N.

For example, the first communication apparatus may be an access network device, for example, a base station or a terrestrial station in a satellite communication system. The first communication apparatus may send the first downlink frame to the terminal device in a broadcast or directional sending manner. This is not specifically limited in this application.

S620: The terminal device sends a first uplink frame to the first communication apparatus. Correspondingly, the first communication apparatus receives the first uplink frame from the terminal device.

A timing advance is performed on the first uplink frame based on receiving of the first downlink frame to implement uplink and downlink synchronization. In other words, the first uplink frame and the first downlink frame are aligned on a first communication apparatus side (a synchronization point is on the first communication apparatus side), or a time difference between the first uplink frame and the first downlink frame on a first communication apparatus side is a determined value (a synchronization point is not on the first communication apparatus side); or the moment of sending the first uplink frame and the moment of receiving the first downlink frame on the first communication apparatus side are the same, or are approximately the same (there is a timing advance offset), or are determined values. A frame number of the first uplink frame may be the same as a frame number of the first downlink frame, and the first uplink frame includes N first uplink subframes.

It should be understood that, in this embodiment of this application, if a system frame sent by the second communication device to the first communication device is a downlink frame, a system frame received by the communication device #2 from the communication device #1 may be referred to as an uplink frame.

S630: The terminal device sends first information to the first communication apparatus. Correspondingly, the first communication apparatus receives the first information from the terminal device.

The first information is determined based on a moment of receiving the i^{th} downlink subframe in the first downlink frame and a moment of sending an i^{th} first uplink subframe in the first uplink frame. The first information may indicate a time difference between the moment of receiving the i^{th} first downlink subframe by the terminal device and the moment of sending the i^{th} first uplink subframe by the terminal device.

The moment of receiving the i^{th} first downlink subframe is a moment of receiving the i^{th} first downlink subframe by the terminal device; or the moment of receiving the i^{th} first downlink subframe is a start moment (a start point) of detecting the i^{th} first downlink subframe by the terminal device; or the moment of receiving the i^{th} first downlink subframe is a first-path time of arrival of detecting the i^{th} first downlink subframe from the first communication apparatus by the terminal device.

For example, a value of i may be specified in a protocol, or the first communication apparatus may send the value of i to the terminal device through broadcast or unicast signaling. For example, the value of i may be carried in a system information block 1 (system information block 1, SIB1), downlink control information (downlink control information, DCI), radio resource control (radio resource control, RRC) signaling, uplink feedback signaling, and the like.

Optionally, the terminal device may further determine the i^{th} first downlink subframe based on a type (for example, a reference signal or data) of information carried in a downlink subframe, content (for example, content specified in a protocol), a channel carrying a downlink subframe, or a format of a channel.

For example, the terminal device may determine, by detecting a reference signal (for example, a PRS), the moment of receiving the i^{th} first downlink subframe, or the terminal device determines, by using the configuration information, that the i^{th} first downlink subframe is a resource used to transmit a reference signal, to determine the moment of receiving the i^{th} first downlink subframe.

For example, the i^{th} first downlink subframe may be configured as a first-type resource, and the first-type resource may be a virtual resource, that is, actually does not carry a reference signal. For example, the first-type resource may be a configured muted PRS resource. Optionally, the first-type resource may be further used to schedule data or another channel signal, to improve resource utilization.

Optionally, before the terminal device receives the i^{th} first downlink subframe, the terminal device may further determine the first information based on the configuration information.

In an example, the first information is a sum of a first time difference and a second time difference. In other words, the first information indicates a time difference #1, and the time difference #1 is the sum of the first time difference and the second time difference.

Specifically, the terminal device may directly determine the time difference between the moment of receiving the i^{th} first downlink subframe and the moment of sending the i^{th} first uplink subframe, to determine the first information. Alternatively, the terminal device may determine the first time difference, the second time difference, and the sum of the first time difference and the second time difference, to determine the first information.

In another example, the first information includes the first time difference and the second time difference, or the first information indicates the first time difference and the second time difference.

The first time difference may be referred to as a receive-transmit time difference of the terminal device, and the first time difference is a time difference between the moment of receiving the i^{th} first downlink subframe and a moment of sending a second uplink subframe. The second uplink subframe is closest to the i^{th} first downlink subframe in terms of time; or the time difference between the moment of sending the second uplink subframe and the moment of receiving the i^{th} first downlink subframe is the smallest; or the moment of sending the second uplink subframe is closest to the moment of receiving the i^{th} first downlink subframe. The second time difference is a time difference between the moment of sending the second uplink subframe and the moment of sending the i^{th} first uplink subframe. Two examples of the second uplink subframe are as follows:
Example #1: The second uplink subframe may be a subframe (for example, a j^{th} subframe, where i≠j, and j is any value from 1 to N) in the first uplink frame. In this example, the second time difference may be a time difference between an i^{th} first uplink subframe and a j^{th} first uplink subframe in the first uplink frame. A manner of determining j is similar to that of determining i. Details are not described again.
Example #2: The second uplink subframe is an i^{th} subframe in an uplink frame #1, a frame number of the uplink frame #1 is different from a frame number of the first uplink frame, and a start moment of the uplink frame #1 may be earlier than or later than that of the first uplink frame. In this example, the second time difference may be a time difference between the moment of sending the i^{th} first uplink subframe in the first uplink frame and a moment of sending the i^{th} subframe in the uplink frame #1.

In still another example, the first information may include the first time difference, a first frame number, and a first subframe number. The first frame number is the frame number of the first uplink frame or the frame number of the uplink frame #1, and the first subframe number is a frame number of the second uplink subframe. The first communication apparatus or a positioning server may determine the second time difference based on the first frame number, the first subframe number, the frame number of the first uplink frame, and a subframe number of the i^{th} first uplink subframe. For example, if the first frame number is the frame number of the first uplink frame, the first subframe number is x, and the frame number of the i^{th} first uplink subframe is x1, the first communication apparatus may determine that the second time difference is a length of |x-x1| subframes.

For example, the terminal device may send the first information to the first communication apparatus in response to a request message of the first communication apparatus; or the terminal device may send the first information to the first communication apparatus based on configuration information of the first communication apparatus. The first information may be carried in radio resource control (radio resource control, RRC) signaling, media access control control element (media access control control element, MAC CE) signaling, or uplink control information (uplink control information, UCI), or the first information may be carried in another piece of uplink information. A manner of sending the first information is not limited in this application.

Optionally, the method further includes:
S640: The first communication apparatus sends first indication information to the terminal device. Correspondingly, the terminal device receives the first indication information from the first communication apparatus.

The first indication information indicates the terminal device to send the sum of the first time difference and the second time difference, or indicates to send the first time difference and the second time difference, or indicates to send the first time difference, the first frame number, and the first subframe number. In other words, the terminal device may determine, based on the first indication information, to send the sum of the first time difference and the second time difference, or send the first time difference and the second time difference, or send the first time difference, the first frame number, and the first subframe number by using the first information.

For example, the first indication information may be carried in RRC signaling, MAC CE signaling, or downlink control information (downlink control information, DCI), or the first indication information may be carried in another piece of downlink information. A manner of sending the first indication information is not limited in this application.

S650: The first communication apparatus sends the first information to a positioning server. Correspondingly, the positioning server receives the first information from the first communication apparatus.

For example, the first communication apparatus sends the first information to the positioning server in response to a request message of the positioning server. For example, the first communication apparatus sends the first information to the positioning server in a form of positioning assistance information. Alternatively, the first communication apparatus may actively send the first information. For example, the first communication apparatus sends the first information to the positioning server based on configuration information.

Optionally, the method further includes:
S660: The terminal device sends a second uplink frame to the first communication apparatus. Correspondingly, the first communication apparatus receives the second uplink frame from the terminal device.

The second uplink frame includes N third uplink subframes, and an m^{th} third uplink subframe in the N third uplink subframes may be used to carry a reference signal, for example, an SRS. Alternatively, the m^{th} third uplink subframe is configured by using the configuration information to send a reference signal. In other words, the network device and/or the terminal device may determine, based on the configuration information, that the m^{th} third uplink subframe is a resource used to carry the reference signal, N is a positive integer, and m is any value from 1 to N. A manner of determining m is similar to that of determining i. Details are not described again.

For example, the second uplink frame may be the same as the first uplink frame. To be specific, the m^{th} first uplink subframe in the first uplink frame may be used to carry a reference signal, or may be configured to send a reference signal.

S670: The first communication apparatus sends a second downlink frame to the terminal device. Correspondingly, the terminal device receives the second downlink frame from the first communication apparatus.

A moment of sending the second downlink frame and a moment of receiving the second uplink frame on the first communication apparatus side are approximately the same, or are determined values. A frame number of the second downlink frame may be the same as a frame number of the second uplink frame, and the second downlink frame includes N second downlink subframes.

S680: The first communication apparatus sends second information to the positioning server. Correspondingly, the positioning server receives the second information from the first communication apparatus.

The second information is determined based on a moment of receiving the m^{th} third uplink subframe in the second uplink frame and a moment of sending an m^{th} second downlink subframe in the second downlink frame. The second information may indicate a time difference between the moment of receiving the m^{th} third uplink subframe by the first communication apparatus and the moment of sending the m^{th} second downlink subframe by the first communication apparatus.

The moment of receiving the m^{th} third uplink subframe may be a moment of receiving the m^{th} third uplink subframe by the first communication apparatus, or the moment of receiving the m^{th} third uplink subframe is a start moment (a start point) of detecting the m^{th} third uplink subframe by the first communication apparatus; or the moment of receiving the m^{th} third uplink subframe is first-path time of arrival of receiving the m^{th} third uplink subframe by the first communication apparatus.

In an example, the second information is a sum of a third time difference and a fourth time difference. In other words, the second information indicates a time difference #2, and the time difference #2 is the sum of the third time difference and the fourth time difference.

For example, the first communication apparatus may directly determine the time difference between the moment of receiving the m^{th} third uplink subframe and the moment of sending the m^{th} second downlink subframe, to determine the second information.

For another example, the first communication apparatus may determine the second information by determining the third time difference, the fourth time difference, and the sum of the third time difference and the fourth time difference.

In another example, the second information includes the third time difference and the fourth time difference, or the second information indicates the third time difference and the fourth time difference.

The third time difference may be referred to as a receive-transmit time difference of the first communication apparatus, and the third time difference is a time difference between the moment of receiving the m^{th} third uplink subframe and a moment of sending a third downlink subframe. The third downlink subframe is closest to the m^{th} third uplink subframe in terms of time; or the time difference between the moment of sending the third downlink subframe and the moment of receiving the m^{th} third uplink subframe is the smallest; or the moment of sending the third downlink subframe is closest to the moment of receiving the m^{th} third uplink subframe. The fourth time difference is a time difference between the moment of sending the third downlink subframe and the moment of sending the m^{th} second downlink subframe.

For example, the third downlink subframe may be a subframe (for example, an n^{th} subframe, where m≠n, and n is any value from 1 to N) in the second downlink frame. That is, the fourth time difference may be a time difference between the m^{th} second downlink subframe and the n^{th} second downlink subframe in the second downlink frame. A manner of determining n is similar to that of determining i. Details are not described again.

In still another example, the second information includes the third time difference, a second subframe number, and a third subframe number. The second subframe number is a frame number of the m^{th} third uplink subframe, and the third subframe number is a frame number of the third downlink subframe. The positioning server may determine the fourth time difference based on the second subframe number and the third subframe number. For example, if the second subframe number is x2, and the third subframe number is x3, the positioning server may determine that the fourth time difference is a length of Ix2-x31 subframes.

It should be understood that a manner of sending the second information is not limited in this application. For example, for a manner of sending the second information, refer to the foregoing manner of sending the first information. For example, the first communication apparatus may send the second information to the positioning server in response to the request message of the positioning server. Alternatively, the first communication apparatus may actively send the second information to the positioning server.

Optionally, the first communication apparatus may simultaneously send the second information and the first information to the positioning server (for the first information, refer to the descriptions in S650). In other words, steps S650 and S680 may be simultaneously performed. For example, the second information and the first information are carried in one message.

Optionally, before the first communication apparatus sends the second information to the positioning server, the method further includes:

S690: The positioning server sends second indication information to the first communication apparatus. Correspondingly, the first communication apparatus receives the second indication information from the positioning server.

The second indication information indicates the terminal device to send the sum of the third time difference and the fourth time difference, or indicates to send the third time difference and the fourth time difference, or indicates to send the third time difference, the second subframe number, and the third subframe number. In other words, the first communication apparatus may determine, based on the second indication information, to send the sum of the third time difference and the fourth time difference, or send the third time difference and the fourth time difference, or send the third time difference, the second subframe number, and the third subframe number by using the second information.

The foregoing describes the steps in which the first communication apparatus reports the first information (denoted as UEspecificRTT1) and the second information (denoted as ΔTA1) to the positioning server once. The first communication apparatus may further report a plurality of UEspecificRTTs and ΔTAs to the positioning server based on the foregoing steps, for example, UEspecificRTT2, UEspecificRTT3, ΔTA2, and ΔTA3 are reported. The plurality of UEspecificRTTs and ΔTAs may be understood as, in a satellite communication scenario, UEspecificRTTs and ΔTAs corresponding to satellites at different positions at different time points, or UEspecificRTTs and ΔTAs corresponding to a plurality of satellites.

Optionally, after the first communication apparatus determines the second information, the first communication apparatus may further send ΔTA to the terminal device, so that the terminal device reports accurate UEspecificRTT during next reporting. For example, the first communication apparatus may send ΔTA1 to the terminal device through a timing advance command (timing advance command, TAC), and the terminal device determines UEspecificRTT2 based on ΔTA1. UEspecificRTT2 is a difference between UEspecificRTT2' and ΔTA1. UEspecificRTT2' may be a sum of the time difference #1 and the time difference #2. For manners of determining the time difference #1 and the time difference #2, refer to the first time difference and the second time difference respectively.

Optionally, a plurality of PRS resources and one corresponding SRS resource may be further configured for the terminal device. The terminal device may determine a plurality of pieces of first information based on positions of the plurality of PRS resources. The terminal device may send an SRS to the first communication apparatus once, so that the first communication apparatus determines one piece of second information based on the SRS. The first communication apparatus may send the plurality of pieces of first information and the second information to the positioning server to verify the position of the terminal device. In other words, the plurality of pieces of first information correspond to a plurality of pieces of second information, and the plurality of pieces of second information are the same, namely, the second information determined by the first communication apparatus based on the SRS.

Optionally, the method further includes:
S6100: The first communication apparatus sends a first parameter to the positioning server. Correspondingly, the positioning server receives the first parameter from the first communication apparatus.

For example, when the first communication apparatus is the terrestrial station in the satellite communication system, the first communication apparatus communicates with the terminal device via a second communication device. For example, the second communication device is a satellite. The first parameter is a common timing advance for communication between the terminal device and the first communication apparatus via the second communication device.

S6110: The positioning server verifies the position of the terminal device based on the first information.

That the positioning server verifies the position of the terminal device based on the first information includes: The positioning server verifies the position of the terminal device based on a plurality of pieces of first information corresponding to satellites at different time points and positions of the satellites; or the positioning server verifies the position of the terminal device based on a plurality of pieces of first information corresponding to satellites at different time points, the second information, and positions of the satellites; or the positioning server verifies the position of the terminal device based on a plurality of pieces of first information corresponding to satellites at different time points, the second information, and the first parameter, and positions of the satellites.

The position of the satellite may be determined based on an auxiliary parameter reported by the first communication apparatus, and the auxiliary parameter may include an ephemeris, a feed delay parameter, or the like. For a specific process in which the positioning server verifies the position of the terminal device, refer to existing related descriptions. For example, a receive-transmit time difference that is of the terminal device and that is required by the existing positioning server to verify the position of the terminal device may be replaced with the sum of the first time difference and the second time difference in this application; and/or a receive-transmit time difference of the gNB may be replaced with the sum of the third time difference and the fourth time difference.

According to the method in this embodiment of this application, the first communication apparatus sends the first information to the positioning server, so that the positioning server can verify the position of the terminal device based on the sum of the first time difference and the second time difference.

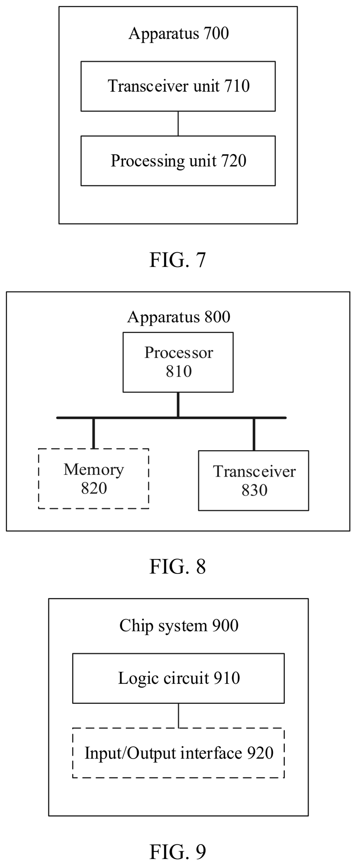

The foregoing describes in detail, with reference to FIG. 6, the communication method provided in embodiments of this application. The following describes in detail communication apparatuses provided in embodiments of this application with reference to FIG. 7 to FIG. 9. It should be understood that descriptions of apparatus embodiments correspond to the descriptions of the method embodiments. Therefore, for content that is not described in detail, refer to the method embodiments. For brevity, details are not described herein.

FIG. 7 is a diagram of a communication apparatus 700 according to an embodiment of this application. The apparatus 700 includes a transceiver unit 710. The transceiver unit 710 may be configured to implement a corresponding communication function. The transceiver unit 710 may also be referred to as a communication interface or a communication unit.

Optionally, the apparatus 700 may further include a processing unit 720, where the processing unit 720 may be configured to perform data processing.

Optionally, the apparatus 700 may further include a storage unit, the storage unit may be configured to store instructions and/or data, and the processing unit 720 may read the instructions and/or the data in the storage unit, so that the apparatus implements actions of different devices in the foregoing method embodiments.

In a possible design, the apparatus 700 may be the first communication apparatus in the foregoing embodiments, or may be a component (for example, a chip) of the first communication apparatus. The apparatus 700 may implement steps or procedures performed by the first communication apparatus in the foregoing method embodiments. The transceiver unit 710 may be configured to perform receiving and sending-related operations of the first communication apparatus in the foregoing method embodiments, for example, receiving and sending-related operations of the first communication apparatus in the embodiment shown in FIG. 6. The processing unit 720 may be configured to perform processing-related operations of the first communication apparatus in the foregoing method embodiments, for example, processing-related operations of the first communication apparatus in the embodiment shown in FIG. 6.

In another possible design, the apparatus 700 may be the terminal device in the foregoing embodiments, or may be a component (for example, a chip) of the terminal device. The apparatus 700 may implement the steps or procedures performed by the terminal device in the foregoing method embodiments. The transceiver unit 710 may be configured to perform receiving and sending-related operations of the terminal device in the foregoing method embodiments, for example, receiving and sending-related operations of the terminal device in the embodiment shown in FIG. 6. The processing unit 720 may be configured to perform processing-related operations of the terminal device in the foregoing method embodiments, for example, processing-related operations of the terminal device in the embodiment shown in FIG. 6.

In another possible design, the apparatus 700 may be the positioning server in the foregoing embodiment, or may be a component (for example, a chip) of the positioning server. The apparatus 700 may implement steps or procedures performed by the positioning server in the foregoing method embodiments. The transceiver unit 710 may be configured to perform receiving and sending-related operations of the positioning server in the foregoing method embodiments, and receiving and sending-related operations of the positioning server in the embodiment shown in FIG. 6. The processing unit 720 may be configured to perform processing-related operations of the positioning server in the foregoing method embodiments, and processing-related operations of the positioning server in the embodiment shown in FIG. 6.

FIG. 8 is a block diagram of a communication apparatus 800 according to an embodiment of this application. The apparatus 800 includes a processor 810, and the processor 810 is coupled to a memory 820. Optionally, the apparatus further includes the memory 820. The memory 820 is configured to store a computer program or instructions and/or data. The processor 810 is configured to execute the computer program or the instructions stored in the memory 820, or read data stored in the memory 820, to perform the method in the foregoing method embodiments.

Optionally, there are one or more processors 810.

Optionally, there are one or more memories 820.

Optionally, the memory 820 and the processor 810 are integrated together, or are disposed separately.

Optionally, as shown in FIG. 8, the apparatus 800 further includes a transceiver 830. The transceiver 830 is configured to receive and/or send a signal. For example, the processor 810 is configured to control the transceiver 830 to receive and/or send a signal.

In a solution, the apparatus 800 is configured to implement operations performed by the first communication apparatus in the foregoing method embodiments.

For example, the processor 810 is configured to execute the computer program or the instructions stored in the memory 820, to implement related operations of the first communication apparatus in the foregoing method embodiments, for example, the method performed by the first communication apparatus in the embodiment shown in FIG. 6.

In another solution, the apparatus 800 is configured to implement operations performed by the terminal device in the foregoing method embodiments.

For example, the processor 810 is configured to execute the computer program or the instructions stored in the memory 820, to implement related operations of the terminal device in the foregoing method embodiments, for example, the method performed by the terminal device in the embodiment shown in FIG. 6.

In another solution, the apparatus 800 is configured to implement operations performed by the positioning server in the foregoing method embodiments.

For example, the processor 810 is configured to execute the computer program or the instructions stored in the memory 820, to implement related operations of the positioning server in the foregoing method embodiments. For example, the method performed by the positioning server in the embodiment shown in FIG. 6.

In an implementation process, steps in the foregoing methods can be implemented by using a hardware integrated logical circuit in the processor 810, or instructions in a form of software. The methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 820. The processor 810 reads information in the memory 820 and implements the steps of the foregoing method with reference to hardware of the processor 810. To avoid repetition, details are not described herein.

It should be understood that, in embodiments of this application, the processor may be one or more integrated circuits, and is configured to execute a related program, to perform the method embodiments of this application.

The processor (for example, the processor 810) may include one or more processors and is implemented as a combination of computing devices. The processor may include one or more of the following: a microprocessor, a microcontroller, a digital signal processor (digital signal processor, DSP), a digital signal processing device (digital signal processing device, DSPD), an application specific integrated circuit (application-specific integrated circuit, ASIC), a field programmable gate array (field programmable gate array, FPGA), a programmable logic device (programmable logic device, PLD), gating logic, transistor logic, a discrete hardware circuit, a processing circuit, other appropriate hardware or firmware, and/or another appropriate combination of hardware and software, and is configured to perform various functions described in this disclosure. The processor may be a general-purpose processor or a dedicated processor. For example, the processor 810 may be a baseband processor or a central processing unit. The baseband processor may be configured to process a communication protocol and communication data. The central processing unit may be configured to enable the apparatus to execute a software program and process data in the software program. A part of the processor may further include a non-volatile random access memory. For example, the processor may further store information of a device type.

The program in this application represents software in a broad sense. A non-limitative example of the software includes program code, a program, a subprogram, instructions, an instruction set, code, a code segment, a software module, an application program, a software application program, or the like. The program may be run in a processor and/or a computer, to enable the apparatus to perform various functions and/or processes described in this application.

The memory (for example, the memory 820) may store data required by the processor (for example, the processor 810) during software execution. The memory may be implemented by using any suitable storage technology. For example, the memory may be any available storage medium that can be accessed by the processor and/or the computer. A non-limitative example of the storage medium includes: a random access memory (random access memory, RAM), a read-only memory (read-only memory, ROM), an electrically erasable programmable read-only memory (electrically EPROM, EEPROM), a compact disc read-only memory (Compact Disc-ROM, CD-ROM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (direct rambus RAM, DR RAM), a removable medium, an optical disc memory, a magnetic disk storage medium, a magnetic storage device, a flash memory, a register, a status memory, a remote mounted memory, a local or remote memory component, or any other medium capable of carrying or storing software, data, or information and accessible by the processor/computer. It should be noted that the memory described in this specification aims to include but is not limited to these memories and any memory of another appropriate type.

The memory (for example, the memory 820) and the processor (for example, the processor 810) may be separately disposed or integrated together. The memory may be configured to connect to the processor, so that the processor can read information from the memory, and store information in and/or write information into the memory. The memory may be integrated into the processor. The memory and the processor may be disposed in an integrated circuit (for example, the integrated circuit may be disposed in UE or another network node).

FIG. 9 is a block diagram of a chip system 900 according to an embodiment of this application. The chip system 900 (or may be referred to as a processing system) includes a logic circuit 910 and an input/output interface (input/output interface) 920.

The logic circuit 910 may be a processing circuit in the chip system 900. The logic circuit 910 may be coupled to a storage unit, and invoke instructions in the storage unit, so that the chip system 900 can implement the methods and functions in embodiments of this application. The input/output interface 920 may be an input/output circuit in the chip system 900, and outputs information processed by the chip system 900, or inputs to-be-processed data or signaling information to the chip system 900 for processing.

In a solution, the chip system 900 is configured to implement operations performed by the first communication apparatus in the foregoing method embodiments.

For example, the logic circuit 910 is configured to implement processing-related operations performed by the first communication apparatus in the foregoing method embodiments, for example, processing-related operations performed by the first communication apparatus in the embodiment shown in FIG. 6. The input/output interface 920 is configured to implement sending and/or receiving-related operations performed by the first communication apparatus in the foregoing method embodiments, for example, sending and/or receiving-related operations performed by the first communication apparatus in the embodiment shown in FIG. 6.

In another solution, the chip system 900 is configured to implement operations performed by the terminal device in the foregoing method embodiments.

For example, the logic circuit 910 is configured to implement processing-related operations performed by the terminal device in the foregoing method embodiments, for example, processing-related operations performed by the terminal device in the embodiment shown in FIG. 6. The input/output interface 920 is configured to implement sending and/or receiving-related operations performed by the terminal device in the foregoing method embodiments, for example, sending and/or receiving-related operations performed by the terminal device in the embodiment shown in FIG. 6.

In another solution, the chip system 900 is configured to implement operations performed by the positioning server in the foregoing method embodiments.

For example, the logic circuit 910 is configured to implement processing-related operations performed by the positioning server in the foregoing method embodiments, for example, processing-related operations performed by the positioning server in the embodiment shown in FIG. 6. The input/output interface 920 is configured to implement sending and/or receiving-related operations performed by the positioning server in the foregoing method embodiments, for example, sending and/or receiving-related operations performed by the positioning server in the embodiment shown in FIG. 6.

An embodiment of this application further provides a computer-readable storage medium. The computer-readable storage medium stores computer instructions for implementing the method performed by a communication apparatus (for example, a first communication apparatus, a terminal device, or a positioning server) in the foregoing method embodiments.

An embodiment of this application further provides a computer program product, including instructions. When the instructions are executed by a computer, the method performed by a communication apparatus (for example, a first communication apparatus, a terminal device, or a positioning server) in the foregoing method embodiments is implemented.

An embodiment of this application further provides a communication system. The communication system includes one or more of the first communication apparatus, the terminal device, or the positioning server in the foregoing embodiments.

For explanations and beneficial effect of related content in any one of the apparatuses provided above, refer to the corresponding method embodiment provided above. Details are not described herein.

In the several embodiments provided in this application, it should be understood that the disclosed apparatus and method may be implemented in other manners. For example, the foregoing apparatus embodiments are merely examples. For example, division into the foregoing units is merely logical function division, and may be another division manner in an actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electrical form, a mechanical form, or another form.

The foregoing units described as separate parts may or may not be physically separate, and parts displayed as units may or may not be physical units, in other words, may be located in one position, or may be distributed on multiple network elements. Some or all of the units may be selected based on actual requirements to implement the solutions provided in this application.

In addition, functional units in embodiments of this application may be integrated into one unit, each of the units may exist alone physically, or two or more units may be integrated into one unit.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a first communication apparatus, a first downlink frame to a terminal device, wherein the first downlink frame comprises N first downlink subframes;
receiving, by the first communication apparatus, a first uplink frame from the terminal device, wherein the first uplink frame comprises N first uplink subframes;
receiving, by the first communication apparatus, first information from the terminal device, wherein the first information indicates a time difference between a moment of receiving an i^{th} first downlink subframe by the terminal device and a moment of sending an i^{th} first uplink subframe by the terminal device, N is a positive integer, and i is any value from 1 to N; and
sending, by the first communication apparatus, the first information to a positioning server.

2. The method according to claim 1, wherein the first information is a sum of a first time difference and a second time difference, the first time difference is a time difference between the moment of receiving the i^{th} first downlink subframe and a moment of sending a second uplink subframe, the moment of sending the second uplink subframe is closest to the moment of receiving the i^{th} first downlink subframe, and the second time difference is a time difference between the moment of sending the second uplink subframe and the moment of sending the i^{th} first uplink subframe.

3. The method according to claim 1, wherein the first information comprises a first time difference and a second time difference, the first time difference is a time difference between the moment of receiving the i^{th} first downlink subframe and a moment of sending a second uplink subframe, the moment of sending the second uplink subframe is closest to the moment of receiving the i^{th} first downlink subframe, and the second time difference is a time difference between the moment of sending the second uplink subframe and the moment of sending the i^{th} first uplink subframe.

4. The method according to claim 2 or 3, wherein before receiving, by the first communication apparatus, the first information from the terminal device, the method further comprises:
sending first indication information to the terminal device, wherein the first indication information indicates to send the sum of the first time difference and the second time difference, or indicates to send the first time difference and the second time difference.

5. The method according to any one of claims 1 to 4, wherein the method further comprises:
receiving, by the first communication apparatus, a second uplink frame from the terminal device, wherein the second uplink frame comprises N third uplink subframes;
sending, by the first communication apparatus, a second downlink frame to the terminal device, wherein the second downlink frame comprises N second downlink subframes; and
sending, by the first communication apparatus, second information to the positioning server, wherein the second information indicates a time difference between a moment of receiving a j^{th} third uplink subframe and a moment of sending a j^{th} second downlink subframe, N is a positive integer, and j is any value from 1 to N.

6. The method according to claim 5, wherein the second information is a sum of a third time difference and a fourth time difference, the third time difference is a time difference between the moment of receiving the j^{th} third uplink subframe and a moment of sending a third downlink subframe, the moment of sending the third downlink subframe is closest to the moment of receiving the j^{th} third uplink subframe, and the fourth time difference is a time difference between the moment of sending the third downlink subframe and the moment of sending the j^{th} second downlink subframe.

7. The method according to claim 5, wherein the second information comprises a third time difference and a fourth time difference, the third time difference is a time difference between the moment of receiving the j^{th} third uplink subframe and a moment of sending a third downlink subframe, the moment of sending the third downlink subframe is closest to the moment of receiving the j^{th} third uplink subframe, and the fourth time difference is a time difference between the moment of sending the third downlink subframe and the moment of sending the j^{th} second downlink subframe.

8. The method according to claim 6 or 7, wherein before sending, by the first communication apparatus, the second information to the positioning server, the method further comprises:
receiving, by the first communication apparatus, second indication information from the positioning server, wherein the second indication information indicates to send the sum of the third time difference and the fourth time difference, or indicates to send the third time difference and the fourth time difference.

9. The method according to any one of claims 1 to 8, wherein the method further comprises:
sending, by the first communication apparatus, configuration information to the terminal device, wherein the configuration information indicates a time difference between the moment of detecting receiving of the i^{th} first downlink subframe by the terminal device and the moment of detecting sending of the i^{th} first uplink subframe by the terminal device, the configuration information is used to configure a resource for sending a reference signal, and the resource comprises the i^{th} first downlink subframe.

10. The method according to any one of claims 1 to 9, wherein the first communication apparatus communicates with the terminal device via a second communication device, and the method further comprises:
sending, by the first communication apparatus, a first parameter to the positioning server, wherein the first parameter is a common timing advance for communication between the terminal device and the first communication apparatus via the second communication device.

11. A communication method, comprising:
receiving, by a third communication apparatus, a first downlink frame from a first communication apparatus, wherein the first downlink frame comprises N first downlink subframes;
sending, by the third communication apparatus, a first uplink frame to the first communication apparatus, wherein the first uplink frame comprises N first uplink subframes; and
sending, by the third communication apparatus, first information to the first communication apparatus, wherein the first information indicates a time difference between a moment of receiving an i^{th} first downlink subframe by the third communication apparatus and a moment of sending an i^{th} first uplink subframe by the third communication apparatus, N is a positive integer, and i is any value from 1 to N.

12. The method according to claim 11, wherein the first information is a sum of a first time difference and a second time difference, the first time difference is a time difference between the moment of receiving the i^{th} first downlink subframe and a moment of sending a second uplink subframe, the moment of sending the second uplink subframe is closest to the moment of receiving the i^{th} first downlink subframe, and the second time difference is a time difference between the moment of sending the second uplink subframe and the moment of sending the i^{th} first uplink subframe.

13. The method according to claim 11, wherein the first time difference information comprises a first time difference and a second time difference, the first time difference is a time difference between the moment of receiving the i^{th} first downlink subframe and a moment of sending a second uplink subframe, the moment of sending the second uplink subframe is closest to the moment of receiving the i^{th} first downlink subframe, and the second time difference is a time difference between the moment of sending the second uplink subframe and the moment of sending the i^{th} first uplink subframe.

14. The method according to claim 12 or 13, wherein before sending, by the third communication apparatus, the first information to the first communication apparatus, the method further comprises:
receiving, by the third communication apparatus, first indication information from the first communication apparatus, wherein the first indication information indicates to send the sum of the first time difference and the second time difference, or indicates to send the first time difference and the second time difference.

15. The method according to any one of claims 11 to 14, wherein the method further comprises:
sending, by the third communication apparatus, a second uplink frame to the first communication apparatus, wherein the second uplink frame comprises N third uplink subframes; and
receiving, by the third communication apparatus, a second downlink frame from the first communication apparatus, wherein the second downlink frame comprises N second downlink subframes, the second uplink frame is used by the first communication apparatus to determine second information, the second information indicates a time difference between a moment of receiving a j^{th} third uplink subframe and a moment of sending a j^{th} second downlink subframe, N is a positive integer, and j is any value from 1 to N.

16. The method according to claim 15, wherein the second information is a sum of a third time difference and a fourth time difference, the third time difference is a time difference between the moment of receiving the j^{th} third uplink subframe and a moment of sending a third downlink subframe, the moment of sending the third downlink subframe is closest to the moment of receiving the j^{th} third uplink subframe, and the fourth time difference is a time difference between the moment of sending the third downlink subframe and the moment of sending the j^{th} second downlink subframe.

17. The method according to claim 15, wherein the second information comprises a third time difference and a fourth time difference, the third time difference is a time difference between the moment of receiving the j^{th} third uplink subframe and a moment of sending a third downlink subframe, the moment of sending the third downlink subframe is closest to the moment of receiving the j^{th} third uplink subframe, and the fourth time difference is a time difference between the moment of sending the third downlink subframe and the moment of sending the j^{th} second downlink subframe.

18. The method according to any one of claims 11 to 17, wherein the method further comprises:
receiving, by the third communication apparatus, configuration information from the first communication apparatus, wherein the configuration information indicates a time difference between the moment of detecting receiving of the i^{th} first downlink subframe by the third communication apparatus and the moment of detecting sending of the i^{th} first uplink subframe by the third communication apparatus, the configuration information is used to configure a resource for sending a reference signal, and the resource comprises the i^{th} first downlink subframe.

19. A communication method, comprising:
receiving, by a positioning server, first information from a first communication apparatus, wherein the first information indicates a time difference between a moment of receiving an i^{th} first downlink subframe in a first downlink frame by a terminal device and a moment of sending an i^{th} first uplink subframe in a first uplink frame by the terminal device, the first downlink frame comprises N first downlink subframes, the first uplink frame comprises N first uplink subframes, N is a positive integer, and i is any value from 1 to N; and
verifying, by the positioning server, a position of the terminal device based on the first information.

20. The method according to claim 19, wherein the first information is a sum of a first time difference and a second time difference, the first time difference is a time difference between the moment of receiving the i^{th} first downlink subframe and a moment of sending a second uplink subframe, the moment of sending the second uplink subframe is closest to the moment of receiving the i^{th} first downlink subframe, and the second time difference is a time difference between the moment of sending the second uplink subframe and the moment of sending the i^{th} first uplink subframe.

21. The method according to claim 19, wherein the first time difference information comprises a first time difference and a second time difference, the first time difference is a time difference between the moment of receiving the i^{th} first downlink subframe and a moment of sending a second uplink subframe, the moment of sending the second uplink subframe is closest to the moment of receiving the i^{th} first downlink subframe, and the second time difference is a time difference between the moment of sending the second uplink subframe and the moment of sending the i^{th} first uplink subframe.

22. The method according to any one of claims 19 to 21, wherein the method further comprises:
receiving, by the positioning server, second information from the first communication apparatus, wherein the second information indicates a time difference between a moment of receiving a j^{th} third uplink subframe in a second uplink frame and a moment of sending a j^{th} second downlink subframe in a second downlink frame, the second uplink frame comprises N third uplink subframes, the second downlink frame comprises N second uplink subframes, N is a positive integer, and j is any value from 1 to N; and
verifying, by the positioning server, the position of the terminal device based on the first information comprises:
verifying, by the positioning server, the position of the terminal device based on the first information and the second information.

23. The method according to claim 22, wherein the second information is a sum of a third time difference and a fourth time difference, the third time difference is a time difference between the moment of receiving the j^{th} third uplink subframe and a moment of sending a third downlink subframe, the moment of sending the third downlink subframe is closest to the moment of receiving the j^{th} third uplink subframe, and the fourth time difference is a time difference between the moment of sending the third downlink subframe and the moment of sending the j^{th} second downlink subframe.

24. The method according to claim 22, wherein the second information comprises a third time difference and a fourth time difference, the third time difference is a time difference between the moment of receiving the j^{th} third uplink subframe and a moment of sending a third downlink subframe, the moment of sending the third downlink subframe is closest to the moment of receiving the j^{th} third uplink subframe, and the fourth time difference is a time difference between the moment of sending the third downlink subframe and the moment of sending the j^{th} second downlink subframe.

25. The method according to claim 23 or 24, wherein before receiving, by the positioning server, the second information from the first communication apparatus, the method further comprises:
sending, by the positioning server, second indication information to the first communication apparatus, wherein the second indication information indicates to send the sum of the third time difference and the fourth time difference, or indicates to send the third time difference and the fourth time difference.

26. The method according to any one of claims 19 to 25, wherein the first communication apparatus communicates with the terminal device via a second communication device, and the method further comprises:
receiving, by the positioning server, a first parameter from the first communication apparatus, wherein the first parameter is a common timing advance for communication between the terminal device and the first communication apparatus via the second communication device; and
verifying, by the positioning server, the position of the terminal device based on the first information comprises:
verifying, by the positioning server, the position of the terminal device based on the first information and the first parameter.

27. A communication apparatus, comprising at least one processor, wherein the at least one processor is configured to execute a computer program stored in a memory, to enable the apparatus to perform the method according to any one of claims 1 to 10; or to perform the method according to any one of claims 11 to 18; or to perform the method according to any one of claims 19 to 26.

28. A computer program product, wherein the computer program product comprises computer program code, and when the computer program code is run, an apparatus is enabled to perform the method according to any one of claims 1 to 10; or to perform the method according to any one of claims 11 to 18; or to perform the method according to any one of claims 19 to 26.

29. A computer-readable storage medium, wherein the computer-readable storage medium stores a computer program, and when the computer program runs, an apparatus is enabled to perform the method according to any one of claims 1 to 10; or to perform the method according to any one of claims 11 to 18; or to perform the method according to any one of claims 19 to 26.

30. A chip system, comprising: a processor, configured to invoke a computer program from a memory and run the computer program, to enable a communication apparatus on which the chip system is installed to perform the method according to any one of claims 1 to 10; or to perform the method according to any one of claims 11 to 18; or to perform the method according to any one of claims 19 to 26.

31. A communication system, comprising a first communication apparatus, a terminal device, and a positioning server, wherein the first communication apparatus is configured to perform the method according to any one of claims 1 to 10, and the terminal device is configured to perform the method according to any one of claims 11 to 18; and the positioning server is configured to perform the method according to any one of claims 19 to 26.
